(19) Europäisches Patentamt / European Patent Office / Office européen des brevets

(11) **EP 2 444 210 A1**

(12) **EUROPEAN PATENT APPLICATION**

(43) Date of publication:
**25.04.2012 Bulletin 2012/17**

(51) Int Cl.:
**B25J 9/16** *(2006.01)*  **G01B 11/25** *(2006.01)*

(21) Application number: **11180428.2**

(22) Date of filing: **07.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.10.2010 JP 2010238308**

(71) Applicant: **Kabushiki Kaisha Yaskawa Denki Kitakyushu-Shi, Fukuoka 806-0004 (JP)**

(72) Inventors:
• **Handa, Hiroyuki**
  **Kitakyushu-Shi Fukuoka 806-0004 (JP)**
• **Arie, Ken**
  **Kitakyushu-Shi Fukuoka 806-0004 (JP)**

(74) Representative: **Gendron, Vincent Christian et al**
  **S.A. Fedit-Loriot**
  **38, avenue Hoche**
  **75008 Paris (FR)**

(54) **Shape measuring system and shape measuring method**

(57)  A shape measuring system includes a laser emitter (15) that emits a laser beam, a scanner (16) that scans the laser beam emitted by the laser emitter over a region in which an object is placed, a camera (11) that detects reflected light of the laser beam, a recognizer (13,42) that performs three-dimensional measurement of the object on the basis of the detection result of the camera, and a controller (13) that performs control so as to change a scanning range of the scanner in accordance with the region in which the object is placed, the region being detected by the camera.

FIG.9

EP 2 444 210 A1

## Description

FIELD

The present invention relates to a shape measuring system and a shape measuring method.

BACKGROUND

Japanese Unexamined Patent Application Publication No. 2001-277167 describes a shape measuring apparatus (three-dimensional position/orientation recognition method) including a laser emitter that emits a laser beam.

SUMMARY

However, because the shape measuring apparatus (three-dimensional position/orientation recognition method) of the Japanese Unexamined Patent Application Publication No. 2001-277167 is configured so that the laser mechanism emits line laser while moving over the components (objects) from the predetermined start point to the predetermined end point every time the robot hand takes out one of the components. Therefore, when scanning of the components with line laser is repeatedly performed, the total time required to scan the components becomes comparatively long.

An object of the present invention is to provide a shape measuring system and a shape measuring method that can reduce the total time required to scan objects.

According to a first aspect of the invention, a shape measuring system includes a laser emitter that emits a laser beam, a scanner that scans the laser beam emitted by the laser emitter over a region in which an object is placed, a camera that detects reflected light of the laser beam, a recognizer that performs three-dimensional measurement of the object on the basis of the detection result of the camera, and a controller that performs control so as to change a scanning range of the scanner in accordance with the region in which the object is placed, the region being detected by the camera.

The shape measuring system according to the first aspect includes a controller that performs control so as to change the scanning region of the scanner in accordance with the region in which the object is placed, the region being detected by the camera. Therefore, for example, the scanning range can be increased in an initial state in which a plurality of objects are placed in a large area, and the scanning range can be decreased as the objects are gradually removed and remaining objects are placed in a smaller area. Thus, the total time required to scan the objects can be reduced by the amount by which the scanning range of the scanner is decreased.

According to a second aspect of the present invention, a shape measuring method includes scanning a laser beam over a region in which an object is placed, detecting reflected light of the laser beam, performing three-dimensional measurement of the object on the basis of the detection result, and changing a scanning range of the laser beam in accordance with the detected region in which the object is placed.

The shape measuring method according to the second aspect includes changing a scanning range of the laser beam in accordance with the detected region in which the object is placed. Therefore, for example, the scanning range can be increased in an initial state in which a plurality of objects are placed in a large area, and the scanning range can be decreased as the objects are gradually removed and remaining objects are placed in a smaller area. Thus, with the shape measuring method, the total time required to scan the objects can be reduced by the amount by which the scanning range of the scanner is decreased.

BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:

Fig. 1 illustrates the overall structure of a robot system according to a first embodiment;
Fig. 2 illustrates a sensor unit of the robot system;
Fig. 3 is a side view of the sensor unit of the robot system;
Fig. 4 is a top view of the sensor unit of the robot system;
Fig. 5 illustrates a state in which the robot system is scanning workpieces;
Fig. 6 is a block diagram of the robot system;
Fig. 7 is a flowchart of a three-dimensional measurement process performed by the robot system;
Fig. 8 illustrates an operation of the robot system at the start of three-dimensional measurement;
Fig. 9 illustrates a state in which the robot system first detects a workpiece after scanning for three-dimensional measurement is started;
Fig. 10 illustrates a state in which a scan start angle for scanning is corrected on the basis of the detected workpiece illustrated in Fig. 9;
Fig. 11 illustrates a state in which the robot system last detects a workpiece after scanning for three-dimensional measurement is started;
Fig. 12 illustrates a state in which a scan end angle for scanning is corrected on the basis of the detected workpiece illustrated in Fig. 11;
Fig. 13 illustrates a state in which no workpiece to be three-dimensionally measured by the robot system remains;
Fig. 14 is a side view illustrating a state in which a robot system according to a second embodiment is scanning workpieces;

Fig. 15 is a perspective view illustrating the state in which the robot system is scanning workpieces;

Fig. 16 is a side view illustrating a state in which the robot system is performing three-dimensional measurement of a pallet;

Fig. 17 is a perspective view illustrating the state in which the robot system is performing three-dimensional measurement of the pallet;

Fig. 18 illustrates an image obtained as a result of the three-dimensional measurement of the pallet performed by the robot system;

Fig. 19 illustrates an image obtained as a result of the three-dimensional measurement of the pallet and workpieces performed by the robot system; and

Fig. 20 illustrates an image obtained by calculating the difference between the result obtained by the three-dimensional measurement of the pallet illustrated in Fig. 18 and the result of the three-dimensional measurement of the pallet and the workpieces illustrated in Fig. 18.

DESCRIPTION OF EMBODIMENTS

Hereinafter, embodiments will be described with reference to the drawings.

First Embodiment

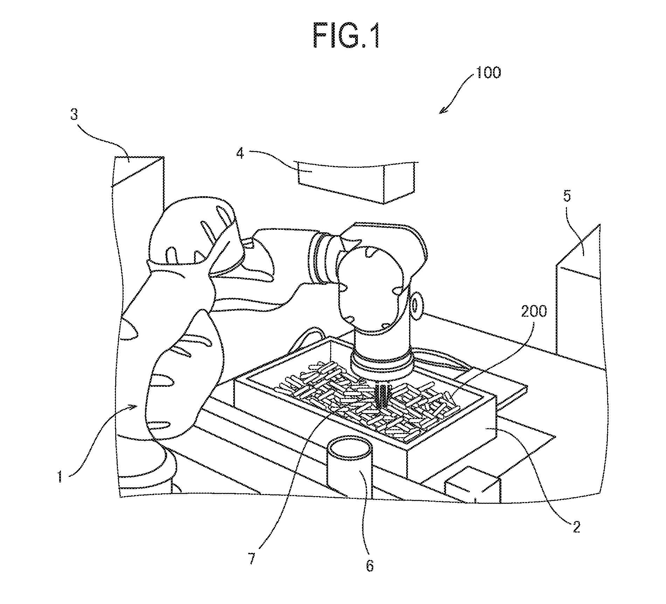

Referring to Fig. 1, the overall structure of a robot system 100 according to a first embodiment will be described.

As illustrated in Fig. 1, the robot system 100 includes a robot 1, a container 2, a robot controller 3, a sensor unit (distance/image sensor unit) 4, a user controller 5, and a transfer pallet 6.

The container 2 is a box (pallet) made of a resin or the like. Workpieces 200, such as bolts, are placed in the container 2. The robot 1 is a vertical articulated robot. A hand mechanism 7 for holding the workpieces 200, which are placed in the container 2, one by one is attached to an end of the robot 1. The hand mechanism 7 is an example of a "gripper". The hand mechanism 7 holds and moves each workpiece 200 to the transfer pallet 6, which is used to transfer the workpieces 200 to the next process. A servo motor (not shown) is disposed in each joint of the robot 1. The servo motor is controlled in accordance with motion commands that have been taught beforehand through the robot controller 3.

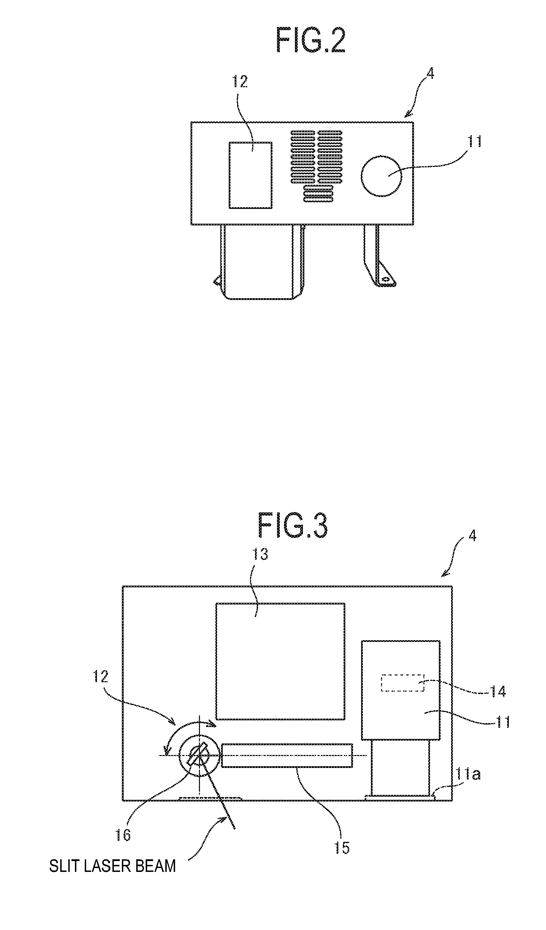

Referring to Figs. 2 to 5, the structure of the sensor unit 4 of the robot system 100 according to the first embodiment will be described.

As illustrated in Fig. 2, the sensor unit 4 includes a high-speed camera 11 and a laser scanner 12. The high-speed camera 11 is an example of a "camera". As illustrated in Fig. 3, a sensor controller 13 is disposed in the sensor unit 4. The sensor controller 13 is an example of a "controller". The high-speed camera 11 includes an image pickup device 14 that includes a CMOS sensor.

The image pickup device 14, which includes a CMOS sensor, forms an image by extracting pixel data from all pixels of the CMOS sensor. The high-speed camera 11 includes a band-pass filter 11a that passes frequencies within a predetermined range.

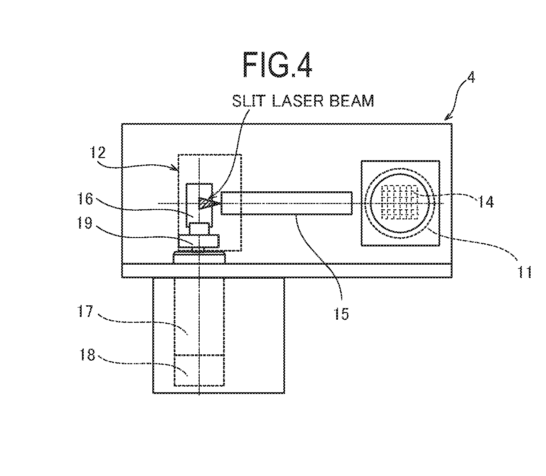

As illustrated in Figs. 3 and 4, the laser scanner 12 includes a laser generator 15 that generates a slit laser beam, a mirror 16 that reflects the slit laser beam, a motor 17 that rotates the mirror 16, an angle detector 18 that detects the rotation angle of the mirror 16, and a jig 19 that fixes the mirror 16 in place. The laser generator 15 is an example of a "laser emitter". The mirror 16 is an example of a "scanner".

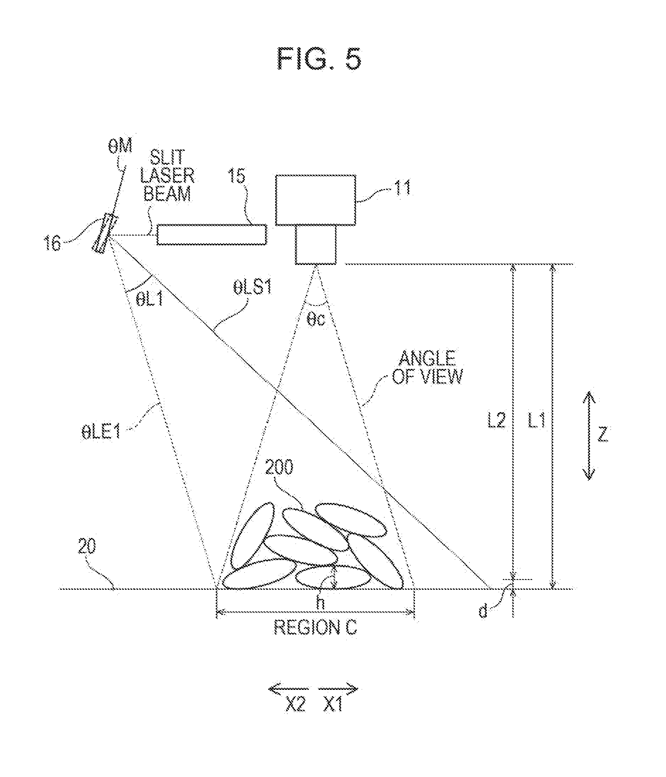

As illustrated in Fig. 5, a slit laser beam generated by the laser generator 15 is reflected by the mirror 16 and emitted toward the workpieces 200. The laser generator 15 emits the slit laser beam toward the rotation center of the mirror 16. As the mirror 16 rotates, the entire region in which the workpieces 200 are placed is scanned by the slit laser beam. The slit laser beam emitted by the mirror 16 and reflected by the workpieces 200 is captured by the high-speed camera 11.

The distance between the high-speed camera 11 and the workpieces 200 (a surface 20 on which the workpieces 200 are placed) is measured three-dimensionally by using the principle of triangulation on the basis of the geometrical relationship among the rotation angle of the motor 17 (mirror 16), the position at which the light is received by the image pickup device 14, the laser generator 15, the mirror 16, and the high-speed camera 11.

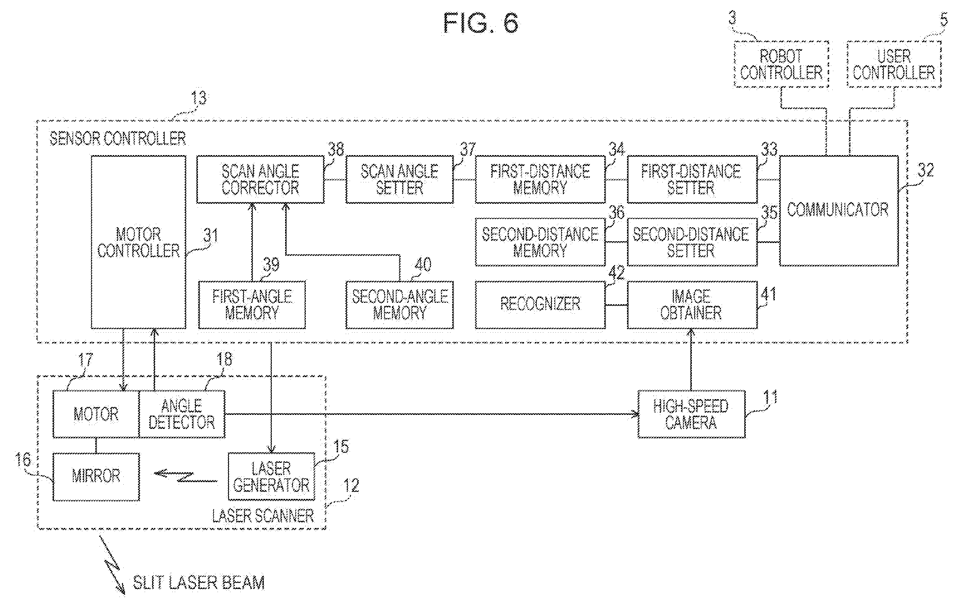

Referring to Fig. 6, the structure of the sensor controller 13 of the robot system 100 according to the first embodiment will be described.

As illustrated in Fig. 6, the sensor controller 13 includes a motor controller 31 that controls the motor 17 of the laser scanner 12. The sensor controller 13 further includes a communicator 32 that is connected to the robot controller 3 and the user controller 5.

A first-distance setter 33 is connected to the communicator 32, and a first-distance memory 34 is connected to the first-distance setter 33. The first-distance setter 33 has a function of setting a distance L1 (see Fig. 5) between the high-speed camera 11 and the surface 20 on which the workpieces 200 are placed. The first-distance memory 34 has a function of storing the distance L1, which is set by the first-distance setter 33. A second-distance setter 35 is connected to the communicator 32, and a second-distance memory 36 is connected to the second-distance setter 35.

The second-distance setter 35 has a function of setting a height d (distance d, see Fig. 5) of a dead band region near the surface 20 on which the workpieces 200 are placed. The second-distance memory 36 has a function of storing the height d (distance d) of the dead band region near the surface 20 on which the workpieces 200 are placed, which is set by the second-distance setter 35. For example, the height d (distance d) of the dead band region near the surface 20 on which the workpieces 200 are placed is set at half the height h (see Fig. 5) of each workpiece 200.

A scan angle setter 37 is connected to the first-distance memory 34. The scan angle setter 37 has a function of setting a scan start angle θLS1 (see Fig. 5), at which the mirror 16 starts scanning a slit laser beam, and a scan end angle θLE1. The scan angle of the slit laser beam is defined with respect to a straight line extending in the Z direction (0 degrees). Because the incident angle and the reflection angle of the slit laser beam with respect to the normal of the mirror 16 are the same, the relationship between the rotation angle θM of the mirror 16 and the scan angle θL of the slit laser beam reflected by the mirror 16 is represented by the following equation (1).

$$\theta L = 2 \times \theta M \qquad (1)$$

The scan start angle θLS1 and the scan end angle θLE1 are geometrically calculated from the distance L1 (see Fig. 5) between the high-speed camera 11 and the surface 20 on which the workpieces 200 are placed, the distance from the center of the high-speed camera 11 to the rotation center of the mirror 16, and an angle of view θC of the high-speed camera 11.

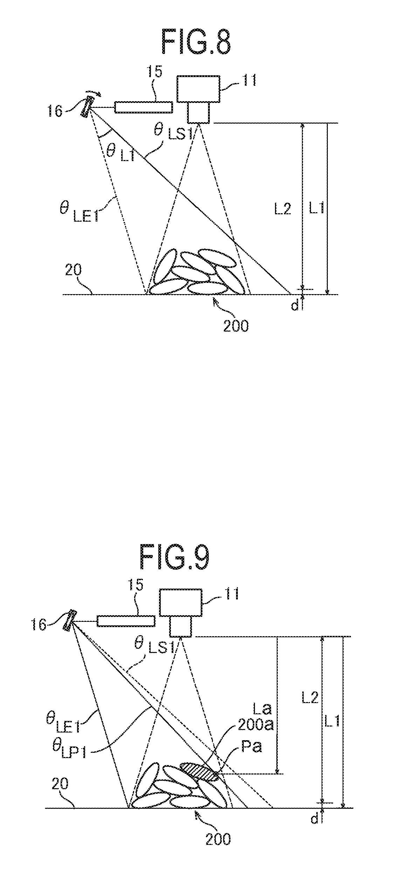

A scan angle corrector 38 is connected to the scan angle setter 37. A first-angle memory 39 and a second-angle memory 40 are connected to the scan angle corrector 38. In the first embodiment, the first-angle memory 39 stores a scan angle (for example, angle θLP1 shown in Fig. 9) of the slit laser beam when the distance (for example, distance La shown in Fig. 9) from the high-speed camera 11 to the workpieces 200 first becomes, after the mirror 16 starts scanning, equal to or smaller than a distance L2 that is the difference (L1 - d) between the distance L1 from the high-speed camera 11 to the surface 20 on which the workpieces 200 are placed and the height d (distance d) of the dead band region near the surface 20 on which the workpieces 200 are placed (La ≤ L2). The distance La from the high-speed camera 11 to the workpieces 200 is an example of a "first distance". The distance L2, which is the difference between the distance L1 from the high-speed camera 11 to the surface 20 on which the workpieces 200 are placed and the height d (distance d) of the dead band region near the surface 20 on which the workpieces 200 are placed is an example of a "second distance".

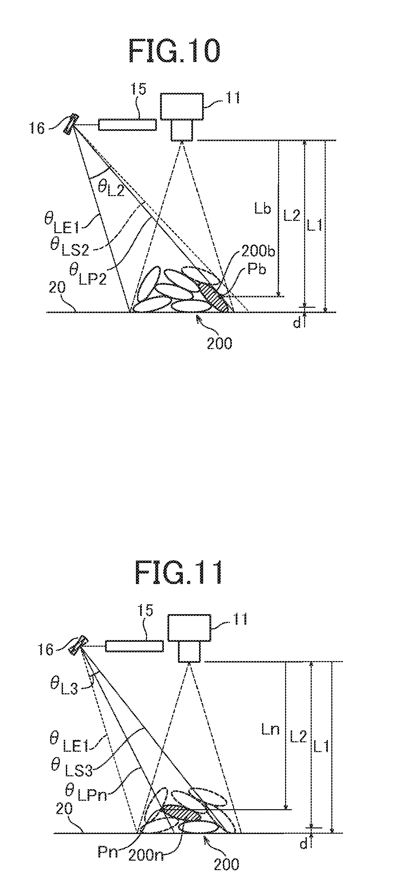

In the first embodiment, the second-angle memory 40 stores a scan angle (for example, angle θLPn shown in Fig. 11) of the slit laser beam when the distance (for example, distance Ln shown in Fig. 11) from the high-speed camera 11 to the workpieces 200 last becomes, before the mirror 16 finishes scanning, equal to or smaller than the distance L2, which is the difference (L1 - d) between the distance L1 from the high-speed camera 11 to the surface 20 on which the workpieces 200 are placed and the height d (distance d) of the dead band region near the surface 20 on which the workpieces 200 are placed (Ln ≤ L2). The scan angle corrector 38 has a function of correcting the scan start angle θLS1, at which scanning of the slit laser beam is started, and a scan end angle θLE1, which are to be set in the scan angle setter 37, on the basis of the scan angles stored in the first-angle memory 39 and the second-angle memory 40. That is, the first embodiment is configured so as to change the scan start angle θLS1 and the scan end angle θLE1 in accordance with the region in which the workpieces 200 are placed.

The sensor controller 13 includes an image obtainer 41, which is connected to the high-speed camera 11, and a recognizer 42, which is connected to the image obtainer 41. (In the present embodiment, the recognizer 42 is realized as one of the functions of the sensor controller 13. However, the recognizer 42 may be realized as a calculation device that is independent from the sensor controller 13, or may be realized as a calculation device that is included in the high-speed camera 11.) The image obtainer 41 has a function of obtaining an image captured by the image pickup device 14 of the high-speed camera 11. The recognizer 42 has a function of recognizing each of the workpieces 200 from the image captured by the high-speed camera 11 and obtained by the image obtainer 41.

Referring to Figs. 5 to 13, three-dimensional measurement of the workpieces 200 performed by the robot system 100 according to the first embodiment will be described. In the first embodiment, in order to simplify description, it is assumed that the workpieces 200 are placed directly on the surface 20 illustrated in Fig. 5, instead of being placed in the container 2.

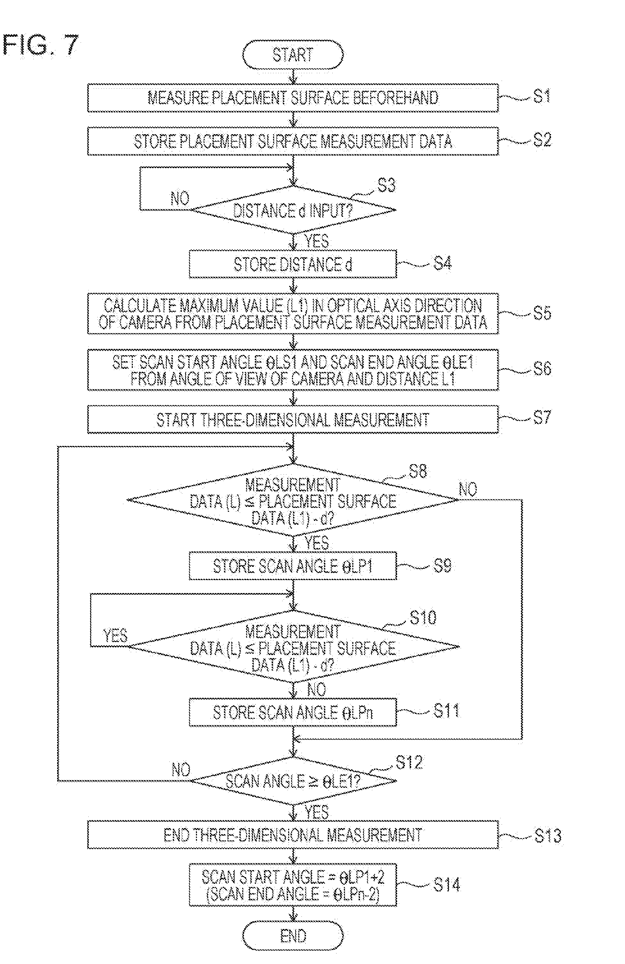

In step S1 of Fig. 7, as illustrated in Fig. 5, the distance from the high-speed camera 11 to the workpieces 200 (the surface 20 on which the workpieces 200 are placed) is measured by receiving light emitted by the mirror 16 and reflected by the workpieces 200 (the surface 20 on which the workpieces 200 are placed) with the high-speed camera 11.

To be specific, the distance between the high-speed camera 11 and the workpieces 200 (the surface 20 on which the workpieces 200 are placed) is measured three-dimensionally by using the principle of triangulation on the basis of the geometrical relationship among the rotation angle of the motor 17 (mirror 16), the position at which the light is received by the image pickup device 14, the laser generator 15, the mirror 16, and the high-speed camera 11. Subsequently, in step S2, the measured distance between the high-speed camera 11 and the workpieces 200 (the surface 20 on which the workpieces 200 are placed) is stored in the first-distance memory 34 via the first-distance setter 33 of the sensor controller 13.

In step S3, a determination is made as to whether the height d (distance d) of the dead band region near the surface 20 on which the workpieces 200 are placed has been manually input by a user through the user controller 5. If it is determined in step S3 that the height d (distance d) of the dead band region has been input, the process proceeds to step S4. The determination of step S3 is repeated until the height d (distance d) of the dead band region is input. In step S4, the distance d, which has been set by a user, is stored in the second-distance memory 36 via the second-distance setter 35. For example, the height d (distance d) of the dead band region near the surface 20 on which the workpieces 200 are placed is set at half the height h (see Fig. 5) of each workpiece 200.

In step S5, the maximum value of the distances between the high-speed camera 11 and the workpieces 200 (the surface 20 on which the workpieces 200 are placed), which have been stored in the first-distance memory 34 in step S2, in the optical axis direction of the high-speed camera 11 (the Z direction) is calculate. The maximum value is set as the distance L1 between the high-speed camera 11 and the surface 20 on which the workpieces 200 are placed. Instead of determining the distance L1 between the high-speed camera 11 and the surface 20 on which the workpieces 200 are placed through steps S1 and S2, the distance L1 may be manually set by a user with the user controller 5.

In step S6, the scan start angle θLS1 and the scan end angle θLE1 of the slit laser beam are calculated from the geometrical relationship among the distance L1, the distance from the center of the high-speed camera 11 to the rotation center of the mirror 16, and the angle of view θC of the high-speed camera 11. The scan start angle θLS1 and the scan end angle θLE1 are set in the scan angle setter 37 of the sensor controller 13. As illustrated in Fig. 5, to enable scanning of all workpieces 200 stacked in the Z direction, the scan start angle θLS1 is set so that the emitted slit laser beam reaches a point beyond a region C, which is a part of the surface 20 that is observable by the high-speed camera 11, in the direction of arrow X1. The scan end angle θLE1 is set so that the emitted slit laser beam coincides with a boundary of the region C of the surface 20, which is the region observable by the high-speed camera 11, in the direction of arrow X2.

In step S7, three-dimensional measurement of the workpieces 200 is started. To be specific, as illustrated in Fig. 8, the slit laser beam is emitted (the mirror 16 is rotated) on the basis of the scan start angle θLS1 and the scan end angle θLE1, which have been set in step S6. That is, the slit laser beam is scanned within a scan angle θL1. Thus, the slit laser beam, which has been generated by the laser generator 15 and reflected by the mirror 16, is emitted toward the workpieces 200 (the surface 20 on which the workpieces 200 are placed), and then is reflected by the workpieces 200 (the surface 20 on which the workpieces 200 are placed). The reflected light enters the high-speed camera 11, whereby an image of the workpieces 200 (the surface 20 on which the workpieces 200 are placed) is captured. Then, the distance L between the high-speed camera 11 and the workpieces 200 is measured three-dimensionally by using the principle of triangulation on the basis of the geometrical relationship among the rotation angle of the motor 17 (mirror 16), the position at which the light is received by the image pickup device 14, the laser generator 15, the mirror 16, and the high-speed camera 11.

As the mirror 16 is rotated, the three-dimensional measurement of the distance L between the high-speed camera 11 and the workpiece 200 is continuously performed. In step S8, while the three-dimensional measurement is continuously performed, a determination is made as to whether the distance L from the high-speed camera 11 to the workpieces 200 has become equal to or smaller than the distance L2, which is the difference (L1 - d) between the distance L1 from the high-speed camera 11 to the surface 20 on which the workpieces 200 are placed and the height d (distance d) of the dead band region near the surface 20 on which the workpieces 200 are placed (i.e., whether L ≤ L1 - d).

As illustrated in Fig. 9, for example, after the mirror 16 has started scanning, the distance La between the high-speed camera 11 and a point Pa of a workpiece 200a is measured on the basis of reflected light reflected at the point Pa on the surface of the workpiece 200a. If it is determined in step S8 that the distance La is equal to or smaller than the distance L2, which is the difference (L1 - d) between the distance L1 from the high-speed camera 11 to the surface 20 on which the workpieces 200 are placed and the height d (distance d) of the dead band region near the surface 20 on which the workpieces 200 are placed (i.e., if La ≤ L1 - d), the process proceeds to step S9. In step S9, the scan angle θLP1 when the slit laser beam is reflected at the point Pa on the surface of the workpiece 200a is stored in the first-angle memory 39 of the sensor controller 13 (see Fig. 6).

The mirror 16 continues scanning, and in step S10, a determination is made as to whether the distance L from the high-speed camera 11 to the workpieces 200 is equal to or smaller than the distance L2, which is the difference (L1 - d) between the distance L1 from the high-speed camera 11 to the surface 20 on which the workpieces 200 are placed and the height d (distance d) of the dead band region near the surface 20 on which the workpieces 200 are placed (i.e., whether L ≤ L1 - d). Step S10 is repeated while it is determined that the distance L from the high-speed camera 11 to the workpieces 200 is equal to or smaller than the distance L2, which is the difference(L1 - d) between the distance L1 from the high-speed camera 11 to the surface 20 on which the workpieces 200 are placed and the height d (distance d) of the dead band region.

As illustrated in Fig. 11, for example, the distance Ln between the high-speed camera 11 and a point Pn on a surface of a workpieces 200n is measured on the basis of reflected light reflected at the point Pn. If it is determined in step S10 that the distance L from the high-speed camera 11 to the workpiece 200n is greater than the distance L2, which is the difference (L1 - d) between distance L1 from the high-speed camera 11 to the surface 20 on which the workpieces 200 are placed and the height d (distance d) of the dead band region near the surface 20 on which the workpieces 200 are placed (i.e., if L > L1 - d), the process proceeds to step S11. As illustrated in Fig. 9, depending on the positions and orientations of the workpieces 200, scanning of the mirror 16 may be finished before it is determined in step S10 that the distance L from the high-speed camera 11 to the workpieces 200 is equal to or greater than the distance L2, which is the difference (L1 - d) between the distance L1 from the high-speed camera 11 to the surface 20 on which the workpieces 200 are placed and the height d (distance d) of the dead band region near the surface 20 on which the workpieces 200 are placed.

In step S12, a determination is made as to whether the scan angle of the slit laser beam has become equal to or greater than the scan end angle θLE1 (whether the scan angle of the slit laser beam has reached the scan end angle θLE1). If it is determined in step S12 that the scan angle of the slit laser beam has not reached the scan end angle θLE1, the process returns to step S8. If it is determined in step S12 that the scan angle of the slit laser beam has become equal to or greater than the scan end angle θLE1, the process proceeds to step S13.

In step S13, the recognizer 42 of the sensor controller 13 performs image recognition of the three-dimensional measurement data. Then, the measurement data obtained by the image recognition is compared with a template of the workpieces 200 that has been stored beforehand, whereby each of the workpieces 200 is recognized. When each of the workpieces 200 is recognized, the position and orientation (inclination and vertical orientation) of the workpiece 200 are recognized at the same time. Then, which one of the recognized workpieces 200 (for example, the workpiece 200a) can be most easily held by the hand mechanism 7 (see Fig. 1) of the robot 1 is determined on the basis of the positions and the orientations of the workpieces 200. The position and orientation of the workpiece 200a, which can be held most easily, are transmitted from the sensor controller 13 to the robot controller 3. Thus, the robot 1 holds the workpiece 200a with the hand mechanism 7 and moves the workpiece 200a to the transfer pallet 6, which is used to transfer the workpiece 200a to the next process.

In step S14, the scan start angle is corrected and set for the next scan by the scan angle corrector 38 and the scan angle setter 37 of the sensor controller 13 (see Fig. 6). To be specific, the scan start angle is corrected to an angle (θLP1 + 2) that is the sum of the scan angle θLP1, which is a scan angle of the slit laser beam that has been stored in the first-angle memory 39 in step S9, and a predetermined angle (for example, two degrees), and the angle is set as a scan start angle θLS2 for the next scan by the scan angle corrector 38 and the scan angle setter 37 of the sensor controller 13 (see Fig. 6). In the state illustrated in Fig. 9, the scan end angle θLE1 is not corrected, because scanning of the mirror 16 is finished in step S10 before it is determined that the distance L from the high-speed camera 11 to the workpieces 200 is equal to or greater than the distance L2, which is the difference (L1 - d) between the distance L1 from the high-speed camera 11 to the surface 20 on which the workpieces 200 are placed and the height d (distance d) of the dead band region.

Subsequently, the process returns to step S7, and three-dimensional measurement is restarted. To be specific, as illustrated in Fig. 10, the mirror 16 is rotated on the basis of the scan start angle θLS2 and the scan end angle θLE1, which have been set in step S14. That is, the slit laser beam is scanned within the scan angle θL2 (< θL1). Steps S8 to S14 are repeated. In the state illustrated in Fig. 10, it is determined in step S8 that the distance Pb between the high-speed camera 11 and a point Pb on a workpiece 200b is equal to or smaller than the distance L2, which is the difference (L1 - d) between the distance L1 from the high-speed camera 11 to the surface 20 on which the workpieces 200 are placed and the height d (distance d) of the dead band region (i.e., Lb ≤ L1 - d), and the scan angle θLP2 of the slit laser beam when the slit laser beam is reflected at the point Pb on the surface of the workpiece 200b is stored in the first-angle memory 39 of the sensor controller 13 (see Fig. 6). Then, the process proceeds to step S14, and an angle (θLP2 + 2) that is the sum of the scan angle θLP2 of the slit laser beam and a predetermined angle (for example, two degrees) is set as a scan start angle θLS3 for the next scan.

Steps S8 to S14 are repeated again, and three-dimensional measurement of the workpieces 200 and transfer of the workpieces 200 to the transfer pallet 6 by the robot 1 with the hand mechanism 7 are alternately performed. Accordingly, the number of the workpieces 200 decreases, for example, as illustrated in Fig. 11. In this case, the slit laser beam is scanned within the scan angle θL3 (< θL2).

The slit laser beam is reflected at the point Pn on the surface of the workpiece 200n and the distance Ln from the high-speed camera 11 to the workpiece 200n is measured. In step S10, it is determined that the distance Ln is greater than the distance L2, which is the difference (L1 - d) between the distance L1 from the high-speed camera 11 to the surface 20 on which the workpieces 200 are placed and the height d (distance d) of the dead band region (i.e., L > L1 - d). In step S11, the scan angle θLPn of the slit laser beam when the distance L (Ln) from the high-speed camera 11 to the workpiece 200n last becomes equal to or smaller than the distance L2, which is the difference (L1 - d) between the distance L1 from the high-speed camera 11 to the surface 20 on which the workpieces 200 are placed and the height d (distance d) of the dead band region (i.e., L ≤ L1 - d) (when the slit laser beam is reflected by the point Pn on the surface of the workpiece 200n), is stored in the second-angle memory 40 of the sensor controller 13 (see Fig. 6). Then, the process proceeds to step S13, and the robot 1 holds the workpiece 200n with the hand mechanism 7 and moves the workpiece 200n to the transfer pallet 6, which is used to transfer the workpiece 200n to the next process. The process proceeds to step S14, and the scan end angle is corrected to an angle (θLPn - 2) that is the difference between the scan angle θLPn of the slit laser beam and a predetermined angle (for example, two degrees), and the angle is set as the scan end angle θLE2 for the next scan by the scan angle corrector 38 and the scan angle setter 37 of the sensor controller 13 (see Fig. 6).

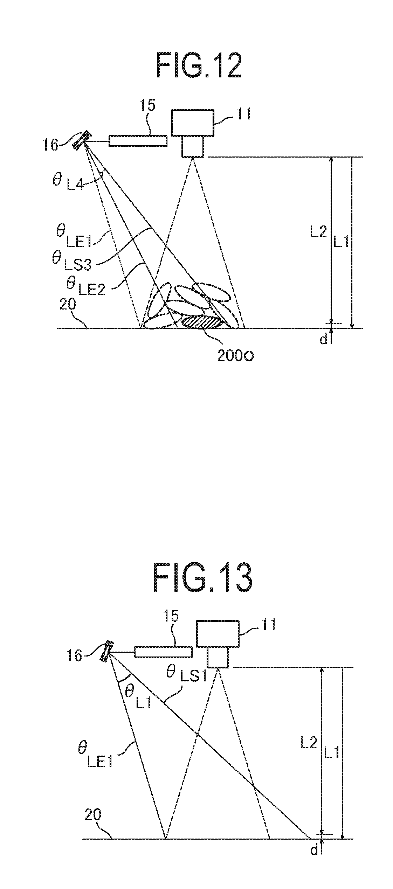

On the basis of the scan end angle θLE2, the slit laser beam is emitted within the scan angle θL4 (< θL3) as illustrated in Fig. 12. Then, a workpiece 200o is recognized. The robot 1 holds the workpiece 200o with the hand mechanism 7, and moves the workpiece 200o to the transfer pallet 6, which is used to transfer the workpiece 200o to the next process. Fig. 13 illustrates a state in which all workpieces 200 have been moved. Then, the slit laser beam is emitted within the scan angle θL4 (see Fig. 12) to check that no workpiece 200 is recognized, and scanning of the slit laser beam is performed on the basis of the scan start angle θLS1 and the scan end angle θLE1, which have been initially set. Thus, even if the hand mechanism 7 of the robot 1 contacts one of the workpieces 200 when the robot 1 is successively moving the workpieces 200 to the transfer pallet 6 while the scanning range of the slit laser beam is being reduced and the one of the workpieces 200 is moved to the outside of the scanning range of the slit laser beam, the workpiece 200 outside the scanning range can be recognized.

In the first embodiment, as described above, the high-speed camera 11 detects the region in which the workpieces 200 are placed, and the sensor controller 13 performs control so as to change the scanning range of the mirror 16 in accordance with the detected region. Thus, the scanning range can be changed in such a way that, for example, the scanning range is increased in an initial state in which the workpieces 200 are placed in a large area and the scanning range is decreased as the workpieces 200 are gradually removed and the remaining workpieces 200 are placed in a smaller area. Thus, the total time required to scan the workpieces 200 can be reduced by the amount by which the scanning range of the slit laser beam with the mirror 16 is reduced. As a result, the total time required by the robot 1 to hold the workpieces 200 and move the workpieces 200 to the transfer pallet 6 can be reduced.

In the first embodiment, as described above, the sensor controller 13 performs control so as to change the scanning range of the mirror 16 by changing at least one of the scan start angle and the scan end angle in accordance with the region in which the workpieces 200 are placed, which is detected by the high-speed camera 11. Thus, the scanning range of the mirror 16 can be decreased by decreasing at least one of the scan start angle and the scan end angle, whereby the total time required to scan the workpieces 200 can be reduced.

In the first embodiment, as described above, the sensor controller 13 calculates the distance L between the high-speed camera 11 and the workpieces 200 on the basis of reflected light from the detected workpiece 200, and changes the scanning range of the mirror 16 on the basis of the distance L between the high-speed camera 11 and the workpieces 200. Thus, the scanning range of the mirror 16 can be easily changed in accordance with the state in which the workpieces 200 are placed and the number of the workpieces 200.

In first embodiment, as described above, the sensor controller 13 changes the scan start angle on the basis of the scan angle of the slit laser beam when the distance L between the high-speed camera 11 and the workpiece 200 first becomes equal to or smaller than the distance L2, which is the difference between the distance L1 from the high-speed camera 11 to the surface 20 on which the workpieces 200 are placed and the height (distance d) of the dead band region near the surface on which the workpieces 200 are placed. Thus, an error in recognizing the region in which the workpieces 200 are placed can be prevented from occurring when a foreign matter that is smaller that the height d (distance d) of the dead band region is present on the surface 20 on which the workpieces 200 are placed and reflected light from the foreign matter is detected.

In the first embodiment, as described above, the sensor controller 13 changes the scan end angle on the basis of the rotation angle of the mirror 16 when the distance L between the high-speed camera 11 and the workpieces 200 last becomes equal to or smaller than the distance L2, which is the difference between the distance L1 from the high-speed camera 11 to the surface 20 on which the workpieces 200 are placed and the height (distance d) of the dead band region near the surface 20 on which the workpieces 200 are placed. Thus, an error in recognizing the region in which the workpieces 200 are placed can be prevented from occurring when a foreign matter that is smaller that the height d (distance d) of the dead band region is present on the surface 20 on which the workpieces 200 are placed and reflected light from the foreign matter is detected.

In the first embodiment, as described above, the height d (distance d) of the dead band region is half the height h of each workpiece 200. Thus, an error in recognizing the region in which the workpieces 200 are placed can be prevented from occurring when reflected light from a foreign matter having a height that is smaller than half the height h of each workpiece 200 is detected.

Second Embodiment

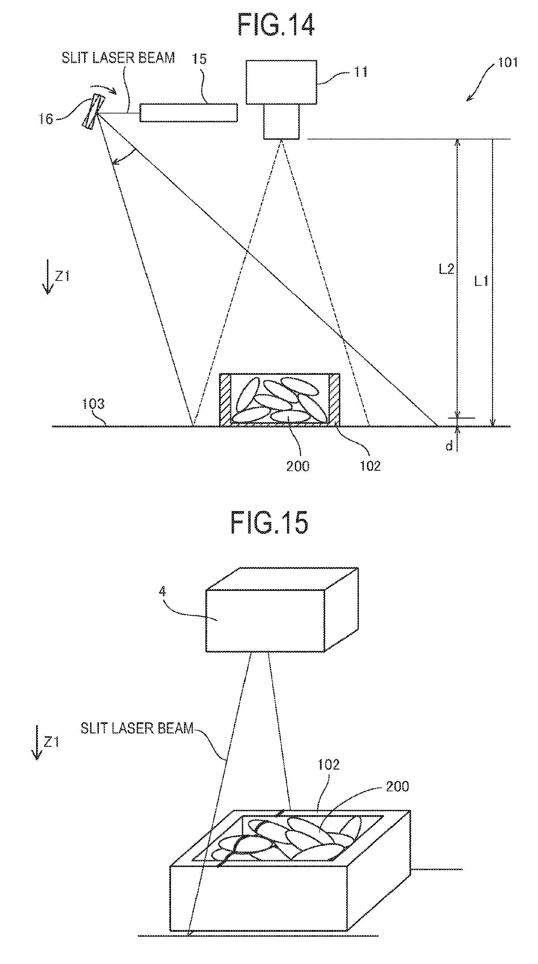

Referring to Figs. 14 and 15, a robot system 101 according to a second embodiment will be described. In the second embodiment, the workpieces 200 are placed in a pallet 102 having a box shape, which is different from the first embodiment in which the workpieces 200 are placed directly on the surface 20.

As illustrated in Figs. 14 and 15, in the robot system 101 according to the second embodiment, the workpieces 200 are placed in the pallet 102 having a box shape. In other respects, the second embodiment is the same as the first embodiment.

Referring to Figs. 14 to 20, three-dimensional measurement performed by the sensor controller 13 according to the second embodiment will be described.

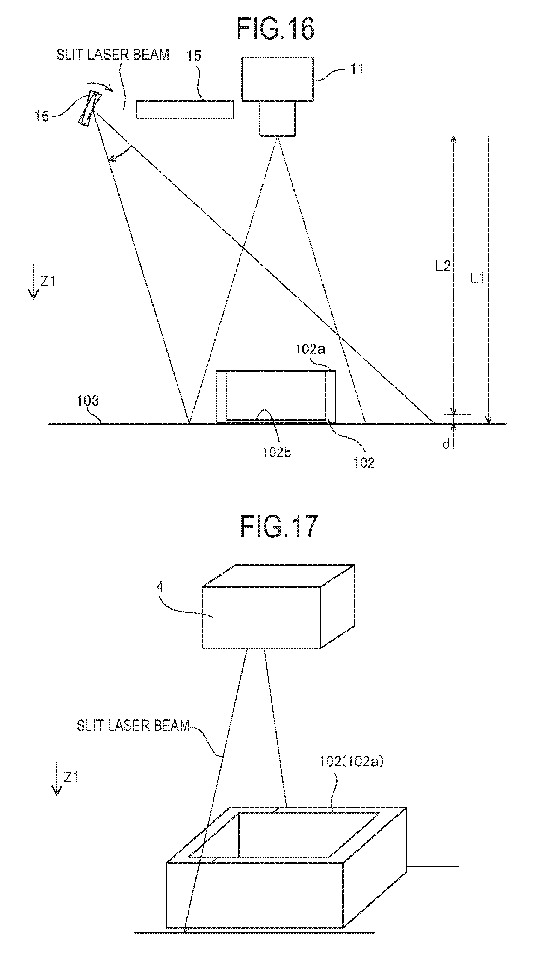

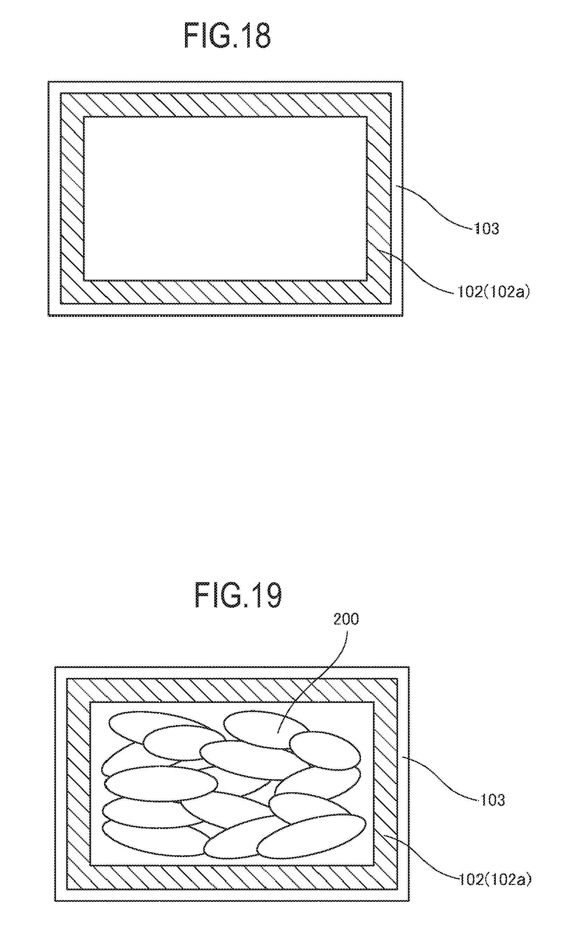

As illustrated in Figs. 16 and 17, before three-dimensional measurement of the workpieces 200 is performed, three-dimensional measurement of the pallet 102, a surface 103 on which the pallet 102 is placed, and the like is performed in a state in which the workpieces 200 are not placed in the pallet 102. To be specific, the distance from the high-speed camera 11 to a frame 102a of the pallet 102, the distance from the high-speed camera 11 to an inner bottom surface 102b of the pallet 102, and the distance from the pallet 102 to the surface 103 on which the pallet 102 is placed, and the like are measured. As illustrated in Fig. 18, an image of the pallet 102 seen in the direction of arrow Z1 (see Figs. 16 and 17) is recognized by the recognizer 42 of the sensor controller 13.

Next, as illustrated in Figs. 14 and 15, the sensor unit 4 performs three-dimensional measurement of the pallet 102 and the workpieces 200 in a state in which the workpieces 200 are placed in the pallet 102. The specific operation of the three-dimensional measurement is the same as that of the first embodiment. Then, as the sensor unit 4 performs three-dimensional measurement of the pallet 102 and the workpieces 200, an image of the pallet 102 and the workpieces 200 seen in the direction of arrow Z1 (see Figs. 14 and 15) is recognized by the recognizer 42 of the sensor controller 13 as illustrated in Fig. 19. In this state, the distance between the high-speed camera 11 and the pallet 102 and the distance between the high-speed camera 11 and the workpieces 200 are obtained. Therefore, in contrast to the first embodiment, the scanning range cannot be corrected on the basis of the distance L between the high-speed camera 11 and the workpieces 200.

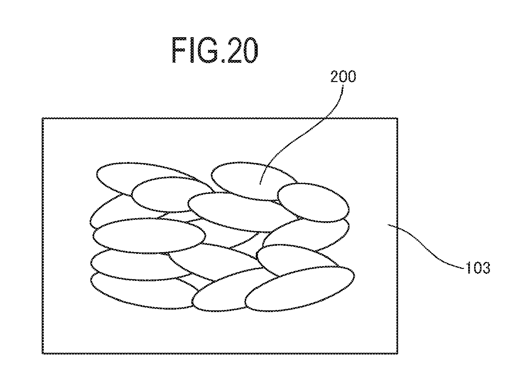

Therefore, the difference between a three-dimensional measurement result of the pallet 102 and the workpieces 200 (distance information, see Fig. 19) and a three-dimensional measurement result of the pallet 102 (distance information, see Fig. 18), which has been measured beforehand, is calculated. Thus, as illustrated in Fig. 20, a three-dimensional measurement result (image) of the workpieces 200 is recognized by the recognizer 42 of the sensor controller 13. As a result, as in the first embodiment, the scanning range of the slit laser beam can be corrected on the basis of the distance L between the high-speed camera 11 and the workpieces 200. Other operations of three-dimensional measurement of the workpieces 200 according to the second embodiment are the same as those of the first embodiment.

In the second embodiment, as described above, the workpieces 200 are placed in the pallet 102, and the sensor controller 13 changes the scanning range of the mirror 16 in accordance with the region in which the workpieces 200 are placed in the pallet 102, which is detected the high-speed camera 11. Thus, an error in recognizing the region in which the workpieces 200 are placed can be prevented from occurring when reflected light from the pallet 102 is detected.

In the second embodiment, as described above, the sensor controller 13 changes the scanning range of the mirror 16 in accordance with the region in which the workpieces 200 are placed, which is detected by the high-speed camera 11, by calculating the difference between the three-dimensional measurement result performed by the high-speed camera 11 in a state in which the workpieces 200 are placed in the pallet 102 and the three-dimensional measurement result performed by the high-speed camera 11 in a state in which the workpieces 200 are not placed in the pallet 102. Thus, an error in recognizing the region in which the workpieces 200 are placed can be prevented from occurring when reflected light from the pallet 102 is detected.

The embodiments disclosed herein are exemplary in all respects and do not limit the present invention. The scope of the present invention is to be understood not from the description of the embodiments described above but from the claims, and includes any modifications within the claims and equivalents thereof.

For example, in the first and second embodiments described above, the scan start angle and the scan end angle are corrected on the basis of the scan angle of the slit laser beam when the distance L from the high-speed camera to the workpieces becomes equal to or smaller than the distance L2, which is the difference (L1 - d) between the distance L1 from the high-speed camera to the surface on which the workpieces are placed and the height d (distance d) of the dead band region near the surface on which the workpieces are placed (i.e., L $\leq$ L1 - d). However, the present invention is not limited thereto. For example, the scan start angle and the scan end angle may be corrected on the basis of the scan angle of the slit laser beam when the distance L from the high-speed camera to the workpieces becomes smaller than the distance L1 between the high-speed camera and the surface on which the workpieces are placed (i.e., L < L1).

In the first and second embodiments, the height d (distance d) of the dead band region is half the height h of each workpiece. However, the present invention is not limited thereto. In the present invention, the distance d may have any value that is equal to or smaller than the height h of the workpieces.

In the first and second embodiments, both the scan start angle and the scan end angle of the slit laser beam are corrected on the basis of the distance L between the high-speed camera and the workpieces. However, the present invention is not limited thereto. For example, only one of the scan start angle and the scan end angle of the slit laser beam may be corrected.

In the first and second embodiments, an image is formed by extracting pixel data from all pixels of the CMOS sensor of the image pickup device. However, the present invention is not limited thereto. For example, the number of pixels of the CMOS sensor from which pixel data is extracted may be reduced as the scanning range of the slit laser beam decreases. Thus, pixel data can be extracted more rapidly by the amount of reduction in the number of pixels from which pixel data is extracted.

**Claims**

1. A shape measuring system comprising:

    a laser emitter (15) that emits a laser beam;
    a scanner (16) that scans the laser beam emitted by the laser emitter over a region in which an object is placed;
    a camera (11) that detects reflected light of the laser beam;
    a recognizer (13,42) that performs three-dimensional measurement of the object on the basis of the detection result of the camera; and
    a controller (13) that performs control so as to change a scanning range of the scanner in accordance with the region in which the object is placed, the region being detected by the camera.

2. The shape measuring system according to Claim 1, wherein the controller performs control so as to change the scanning range of the scanner by changing at least one of a scan start angle and a scan end angle in accordance with the region in which the object is placed, the region being detected by the camera.

3. The shape measuring system according to Claim 1 or 2,
    wherein the controller calculates a first distance between the camera and the object on the basis of the detected reflected light from the object, and changes the scanning range of the scanner on the basis of the first distance between the camera and the object.

4. The shape measuring system according to Claim 3, wherein the controller changes the scan start angle on the basis of a scan angle of the laser beam when the first distance between the camera and the object first becomes equal to or smaller than a second distance that is a difference between a distance from the camera to a surface on which the object is placed and a height of a dead band region near the surface on which the object is placed.

5. The shape measuring system according to Claim 3 or 4,

wherein the controller changes the scan end angle on the basis of the scan angle of the laser beam when the first distance between the camera and the object last becomes equal to or smaller than the second distance that is the difference between the distance from the camera to the surface on which the object is placed and the height of the dead band region near the surface on which the object is placed.

6. The shape measuring system according to Claim 4 or 5,
    wherein the second distance is equal to or greater than a distance that is a difference between the distance from the camera to the surface on which the object is placed and a height of the object and smaller than the distance between the camera and the surface on which the object is placed.

7. The shape measuring system according to any one of Claims 1 to 6,
    wherein the object is placed in a container (2), and wherein the controller changes the scanning range of the scanner in accordance with a region in which the object in placed in the container, the region being detected by the camera.

8. The shape measuring system according to Claim 7, wherein the controller changes the scanning range of the scanner in accordance with the region in which the object is placed in the container, the region being detected by the camera, by calculating a difference between a result of three-dimensional measurement performed by the camera in a state in which the object is placed in the container and a result of three-dimensional measurement performed by the camera in a state in which the object is not placed in the container.

9. The shape measuring system according to any one of Claims 1 to 8, further comprising:

    a robot (1) including a gripper that holds the object;
    and
    a robot controller (3) that provides a motion command to the robot on the basis of shape data measured by the controller.

10. A shape measuring method comprising:

    scanning a laser beam over a region in which an object is placed;
    detecting reflected light of the laser beam
    performing three-dimensional measurement of the object on the basis of the detection result; and
    changing a scanning range of the laser beam in accordance with the detected region in which the object is placed.

# FIG.1

# FIG.2

12    4

11

# FIG.3

13    4

12

14

11

16

15

11a

SLIT LASER BEAM

# FIG.4

SLIT LASER BEAM

## FIG. 5

# FIG. 6

EP 2 444 210 A1

FIG. 7

START

MEASURE PLACEMENT SURFACE BEFOREHAND — S1

STORE PLACEMENT SURFACE MEASUREMENT DATA — S2

DISTANCE d INPUT? — S3
NO
YES

STORE DISTANCE d — S4

CALCULATE MAXIMUM VALUE (L1) IN OPTICAL AXIS DIRECTION
OF CAMERA FROM PLACEMENT SURFACE MEASUREMENT DATA — S5

SET SCAN START ANGLE θLS1 AND SCAN END ANGLE θLE1
FROM ANGLE OF VIEW OF CAMERA AND DISTANCE L1 — S6

START THREE-DIMENSIONAL MEASUREMENT — S7

MEASUREMENT
DATA (L) ≤ PLACEMENT SURFACE
DATA (L1) - d? — S8
NO
YES

STORE SCAN ANGLE θLP1 — S9

MEASUREMENT
DATA (L) ≤ PLACEMENT SURFACE
DATA (L1) - d? — S10
YES
NO

STORE SCAN ANGLE θLPn — S11

SCAN ANGLE ≥ θLE1? — S12
NO
YES

END THREE-DIMENSIONAL MEASUREMENT — S13

SCAN START ANGLE = θLP1+2
(SCAN END ANGLE = θLPn-2) — S14

END

# FIG.8

# FIG.9

## FIG.10

## FIG.11

# FIG.12

# FIG.13

# FIG.14

SLIT LASER BEAM

# FIG.15

SLIT LASER BEAM

## FIG.16

SLIT LASER BEAM
15
11
16
Z1
L2
L1
103
102a
102b
102
d

## FIG.17

4
SLIT LASER BEAM
Z1
102(102a)

# FIG.18

103

102(102a)

# FIG.19

200

103

102(102a)

# FIG.20

Europäisches
Patentamt

European
Patent Office

Office européen
des brevets

## EUROPEAN SEARCH REPORT

Application Number

EP 11 18 0428

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/240754 A1 (SMITH MELVYN LIONEL [GB] ET AL) 2 December 2004 (2004-12-02) * abstract; figures 1,2,3,4,29 * * paragraph [0053] - paragraph [0061] * * paragraph [0133] - paragraph [0134] * ----- | 1-6,10 | INV. B25J9/16 G01B11/25 |
| X | EP 1 418 025 A2 (FANUC LTD [JP]) 12 May 2004 (2004-05-12) * abstract * ----- | 1,2,7-10 | |
| X | US 4 300 836 A (HOLMES JONES F ET AL) 17 November 1981 (1981-11-17) * abstract; figure 2 * * column 3 - column 8 * ----- | 1-6,10 | |
| X | EP 1 428 634 A2 (FANUC LTD [JP]) 16 June 2004 (2004-06-16) * the whole document * ----- | 1-3,7-10 | |
| | | | TECHNICAL FIELDS SEARCHED (IPC) B25J G01B |

The present search report has been drawn up for all claims

| Place of search | Date of completion of the search | Examiner |
|---|---|---|
| Munich | 22 December 2011 | Stanciu, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 18 0428

This annex lists the patent family members relating to the patent documents cited in  the above-mentioned European search report.
The members are as contained in the European Patent Office EDP file on
The European Patent Office is in no way liable for these particulars which are merely given for the purpose of information.

22-12-2011

| Patent document cited in search report | | | Publication date | Patent family member(s) | | | Publication date |
|---|---|---|---|---|---|---|---|
| US 2004240754 | A1 | | 02-12-2004 | NONE | | | |
| EP 1418025 | A2 | | 12-05-2004 | EP | 1418025 | A2 | 12-05-2004 |
| | | | | JP | 2004160567 | A | 10-06-2004 |
| | | | | US | 2004117066 | A1 | 17-06-2004 |
| US 4300836 | A | | 17-11-1981 | CA | 1160828 | A1 | 24-01-1984 |
| | | | | US | 4300836 | A | 17-11-1981 |
| EP 1428634 | A2 | | 16-06-2004 | EP | 1428634 | A2 | 16-06-2004 |
| | | | | JP | 3805302 | B2 | 02-08-2006 |
| | | | | JP | 2004188562 | A | 08-07-2004 |
| | | | | US | 2004122552 | A1 | 24-06-2004 |

EPO FORM P0459

For more details about this annex : see Official Journal of the European Patent Office, No. 12/82

**REFERENCES CITED IN THE DESCRIPTION**

**Patent documents cited in the description**

- JP 2001277167 A